Europäisches Patentamt

European Patent Office

Office européen des brevets

(19)

(11) Numéro de publication : **0 030 882**
**B1**

(12) **FASCICULE DE BREVET EUROPÉEN**

(45) Date de publication du fascicule du brevet :
18.01.84

(51) Int. Cl.³ : **B 65 G 35/06**, B 62 D 65/00,
B 23 Q 7/14

(21) Numéro de dépôt : **80401700.2**

(22) Date de dépôt : **28.11.80**

(54) **Installation de transfert de produits manufacturés, notamment d'éléments de carrosseries de véhicules automobiles.**

(30) Priorité : 06.12.79 FR 7929990
03.11.80 FR 8023450

(43) Date de publication de la demande :
24.06.81 Bulletin 81/25

(45) Mention de la délivrance du brevet :
18.01.84 Bulletin 84/03

(84) Etats contractants désignés :
AT BE CH DE GB IT LI LU NL SE

(56) Documents cités :
DE-C- 566 008
FR-A- 2 258 244
GB-A- 771 790
US-A- 2 120 966
US-A- 4 035 904

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Thibault, Bernard**
**6 cours des Longs Prés**
**F-92100 Boulogne Billancourt (FR)**
Inventeur : **Le Goff, André**
**20, rue du Hameau**
**F-78640 Neauphle le Château (FR)**

(74) Mandataire : Ancel, Roger et al
**R.N.U.R. S.0804 B.P. 103 8 & 10, avenue Emile Zola**
**F-92109 Boulogne-Billancourt (FR)**

Jouve, 18, rue St-Denis, 75001 Paris, France

Installation de transfert de produits manufacturés, notamment d'éléments de carrosseries de véhicules automobiles

La présente invention se rapporte à une installation de transfert de produits manufacturés, notamment d'éléments de carrosseries de véhicules automobiles, en particulier pour lignes d'assemblage automatisées par robots.

La généralisation de l'automatisation des chaînes de fabrication de véhicules automobiles par robots ou automates programmables requiert une structure de base de ces chaînes qui, tout en étant extrêmement rigide, procure un dégagement environnant optimal autorisant un débattement maximum des bras de travail desdits robots.

En outre, l'utilisation des automates programmables permet, grâce à la multiprogrammation, de faire effectuer successivement et sans interruption, à volonté, par ces automates la même opération d'assemblage sur des ensembles ou sous-ensembles de types différents de carrosseries, par une simple sélection de programme d'évolutions du bras de travail de ces automates. Il s'avère donc souhaitable de pouvoir introduire sélectivement sur la chaîne de transfert au moins deux modèles distincts de montages-supports adaptés chacun à recevoir des éléments de types différents de carrosseries.

Ainsi que l'enseigne par exemple le brevet anglais n° 771 790, il est connu d'utiliser sur les lignes d'usinage et/ou d'assemblage de produits manufacturés, et notamment de véhicules automobiles, des installations de transfert composées d'une ligne supérieure d'avancement de montages-supports desdits produits manufacturés et d'une ligne inférieure de retour des montages-supports vides, formant ligne de stockage en attente par accumulation desdits montages-supports, et s'étendant sensiblement sous la ligne supérieure d'avancement, ainsi que de translateurs latéraux disposés à chacune de leurs extrémités. Ces installations ne permettaient pas jusqu'à présent de sélectionner aisément à volonté sur la ligne inférieure de retour et de stockage par accumulation, les montages-supports en fonction des désirs ou besoins immédiats d'assemblage successif en particulier de types différents de carrosseries.

Il s'avère en outre très avantageux de pouvoir assurer sélectivement sur la même chaîne de transfert l'assemblage d'au moins trois variantes ou types distincts d'éléments de carrosseries, et notamment de carrosseries destinées d'une part à un véhicule à cadence de production constante, et d'autres parts à un véhicule à cadence de production décroissante et à un véhicule à cadence de production croissante, afin par exemple d'absorber avec une souplesse optima les périodes de transition lors de l'extinction décroissante d'un modèle vieillissant et du lancement progressif, en simultanéité, d'un nouveau modèle.

Le but de la présente invention est, en particulier, d'adapter ce type de transfert en vue de répondre aux exigences précitées.

A cet effet, l'installation de transfert de produits manufacturés, notamment d'éléments de carrosseries de véhicules automobiles, objet de la présente invention, se caractérise par le fait que la ligne de retour comporte deux voies parallèles séparées par une ligne médiane de supports centraux soutenant la ligne supérieure d'avancement, et extérieurement délimitées chacune par une structure latérale assurant une fonction d'arc-boutant pour ladite ligne supérieure d'avancement, l'alimentation sélective de chacune des voies de retour parallèles et de la ligne supérieure d'avancement en montages-supports étant assurée par l'intermédiaire des translateurs latéraux précités.

Selon une variante de réalisation préférée la ligne médiane de supports centraux est dédoublée en deux lignes parallèles soutenant simultanément la ligne supérieure d'avancement, et délimitant une troisième voie centrale de retour des montages-supports vides, sensiblement située sous ladite ligne supérieure d'avancement.

Selon d'autres caractéristiques avantageuses de l'invention, chacune des voies de retour parallèles est distinctement alimentée en montages-supports munis de moyens de centrage et de verrouillage spécifiques destinés à recevoir des éléments d'un type différent de carrosseries, et de préférence, dans la variante de réalisation à trois voies de retour parallèles, l'une est affectée aux montages-supports spécifiques à un véhicule à cadence de production constante, la seconde à un véhicule de cadence de production décroissante, et la troisième à un véhicule à cadence de production croissante en compensation de la seconde.

Enfin, les translateurs latéraux, de type connu, sont pilotés par des moyens de repère sélectifs associés aux différents types d'éléments de carrosseries se présentant en entrée et sortie de l'installation.

L'invention sera mieux comprise à la lecture de la description suivante d'une forme de réalisation non limitative d'installation de transfert de produits manufacturés, notamment d'éléments de carrosserie, en référence au dessin annexé dans lequel :

la figure 1 est une vue en élévation schématique de l'installation de transfert selon l'invention ;

la figure 2 est une vue en plan schématique de l'installation de la figure 1 ;

la figure 3 est une vue partielle à plus grande échelle de l'installation de la figure 1 ;

la figure 4 est une coupe transversale de la figure 3 ;

la figure 5 est une variante de la figure 4.

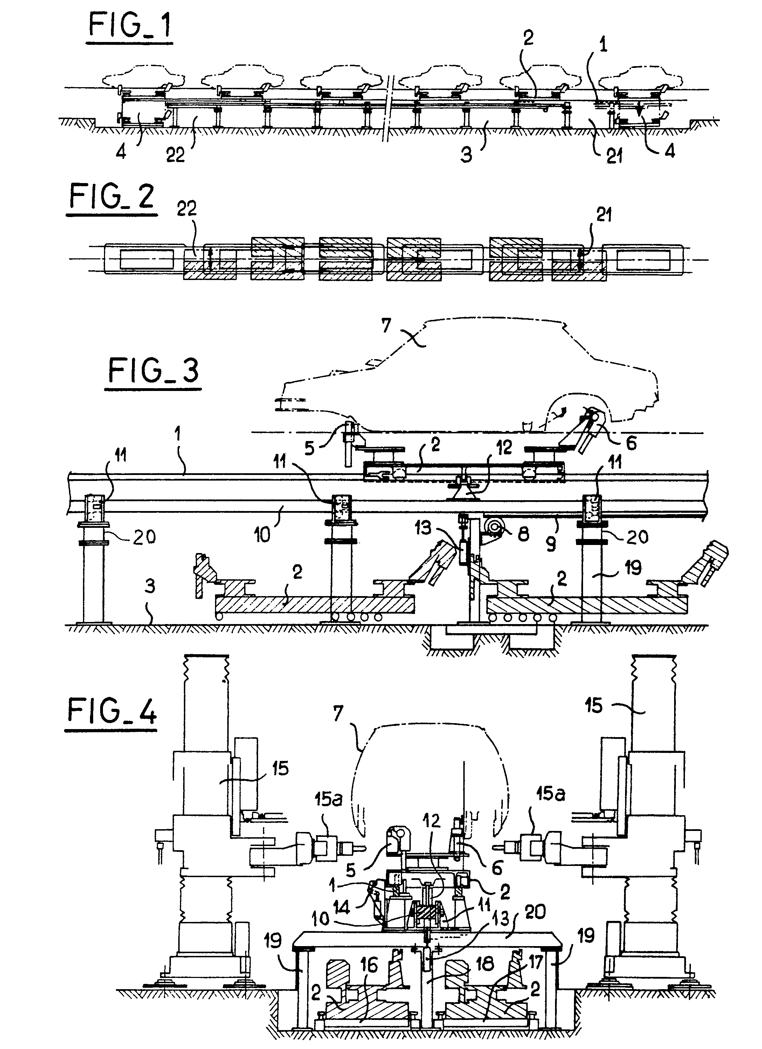

Ainsi qu'il apparaît sur le dessin, notamment sur les figures 1 et 2, l'installation de transfert se compose essentiellement d'une ligne supérieure 1 d'avancement pas-à-pas pour les montages-supports 2, constitués dans le cas présent par des chariots, et d'une ligne inférieure 3, à entraînement par rouleaux commandés par moteurs-freins de type connu, de retour des montages-supports 2 vides, formant ligne de stockage par accumulation, l'approvisionnement en montages-supports 2 de chacune de ces lignes à partir de l'autre s'effectuant en entrée et sortie de chaîne de manière classique par table élévatrice 4.

Tel que représenté au dessin, notamment sur les figures 3, 4 et 5, les montages-supports 2, munis de moyens appropriés 5, 6 à commande fluidique de centrage et de verrouillage des éléments de carrosseries 7, sont entraînés en translation pas-à-pas sur la ligne supérieure 1 d'avancement par un système pignon 8-crémaillère 9 animant d'un mouvement alternatif de va-et-vient horizontal une barre de transfert 10 coulissant dans des boîtiers de guidage 11 à galets, et munie de mâchoires 12, d'entraînement pas-à-pas des montages-supports 2, verticalement escamotables par vérins 13 à commande fluidique pour autoriser le mouvement de retour de la barre de transfert 10.

La ligne supérieure 1 d'avancement comporte encore des moyens latéraux 14, également à commande fluidique, d'indexation et de verrouillage des montages-supports 2 devant les différents postes d'implantation et de travail des robots 15.

Conformément à l'objet de l'invention, et ainsi que l'illustre plus particulièrement la figure 4, la ligne de retour 3 des montages-supports 2 vides est constituée de deux voies 16, 17 parallèles, séparées par une ligne médiane de supports centraux 18, constitués par des piliers alignés dans l'axe longitudinal de la ligne supérieure 1 d'avancement, pour soutenir ladite ligne supérieure 1 d'avancement, les deux voies 16, 17 parallèles étant chacune extérieurement délimitées par une structure latérale, constituée d'alignements externes de piliers 19 parallèles à la ligne médiane de supports centraux 18, et de traverses horizontales 20 reposant en leur centre sur les supports centraux 18 et par leurs extrémités sur les piliers externes 19, ladite structure latérale assurant ainsi une fonction d'arc-boutant pour la ligne supérieure 1 d'avancement, procurant de ce fait une largeur d'assise et une rigidité d'ensemble du transfert compatibles avec l'assemblage par robots 15 et le dégagement nécessaire au débattement optimal des bras de travail 15a de ces derniers.

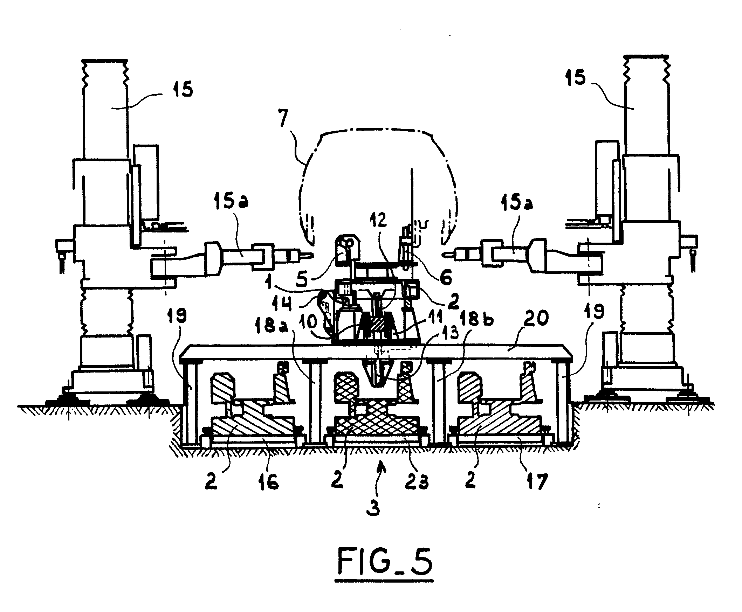

Dans la variante de réalisation préférée représentée par la figure 5, la ligne médiane de supports centraux est dédoublée en deux lignes parallèles 18a, 18b de piliers alignés sensiblement à l'aplomb des limites latérales de la ligne supérieure 1 d'avancement afin de soutenir simultanément cette dernière, et délimitant ainsi une troisième voie 23 centrale de retour des montages-supports 2 vides, sensiblement située sous ladite ligne supérieure 1 d'avancement.

Chacune des voies 16, 17 et 23 de retour parallèles est distinctement alimentée en montages-supports 2 munis de moyens 5, 6 de centrage et de verrouillage spécifiques destinés à recevoir des éléments d'un type différent de carrosseries.

Dans ce but, la ligne inférieure 3 de retour des montages-supports 2 vides comporte à chacune de ses extrémités, un translateur latéral de type connu, non représenté au dessin, et incorporé à proximité immédiate des tables élévatrices 4 aux endroits désignés par les repères 21, 22 sur les figures 1 et 2. Le translateur latéral situé en entrée 21 de la ligne inférieure 3 de retour sert à distribuer les modèles de montages-supports 2 sur l'une ou l'autre des voies 16, 17 et 23 de stockage en retour par accumulation, suivant les éléments de types de carrosseries 7 qu'ils sont destinés à recevoir, et le translateur latéral situé en sortie 22 permet de sélectionner suivant les besoins le modèle de montage-support 2 à approvisionner sur la ligne supérieure 1 d'avancement. Les déplacements latéraux de ces translateurs peuvent fort avantageusement être pilotés par des moyens de repère sélectifs optiques ou mécaniques, non représentés au dessin, associés aux différents types d'éléments de carrosseries se présentant en entrée et sortie de l'installation, et participant également à la sélection des programmes d'évolution des bras de travail 15a des robots 15. Il s'avère donc aisé de pouvoir introduire sélectivement sur la chaîne de transfert au moins deux modèles distincts de montages-supports 2 adaptés chacun à recevoir des éléments de types différents de carrosseries.

Dans la variante de réalisation représentée par la figure 5 les trois voies 16, 17 et 23 de retour parallèles formant lignes de stockage par accumulation, l'une au choix peut ainsi avantageusement être affectée aux montages-supports 2 spécifiques à un véhicule à cadence de production constante, la seconde à un véhicule à cadence de production décroissante, et la troisième à un véhicule à cadence de production croissante en compensation de la seconde, permettant ainsi par exemple d'absorber avec une souplesse optima les périodes de transition lors de l'extinction décroissante d'un modèle vieillissant et du lancement progressif, en simultanéité, d'un nouveau modèle.

Dans la présente installation de transfert, la ligne inférieure 3 de retour des montages-supports 2 vides peut fort bien dans certains cas comporter plus de trois voies de retour parallèles, sans pour autant sortir du cadre de l'invention.

## Revendications

1. Installation de transfert de produits manufacturés, notamment d'éléments de carrosseries de véhicules automobiles, applicable en particulier aux lignes d'assemblage automatisées par robots, cette installation étant composée d'une ligne supérieure (1) d'avancement de montages-supports (2) desdits produits manufacturés (7), et d'une ligne inférieure (3) de retour des montages-supports (2) vides, formant ligne de stockage par accumulation desdits montages-supports (2), et s'étendant sensiblement sous la ligne supérieure (1) d'avancement, ainsi que de translateurs latéraux disposés à chacune de ses extrémités caractérisée par le fait que la ligne de retour (3) comporte deux voies (16, 17) parallèles, séparées par une ligne médiane de supports centraux (18) soutenant la ligne supérieure (1) d'avancement, et extérieurement délimitées chacune par une structure latérale (19, 20) assurant une fonction d'arc-boutant pour ladite ligne supérieure (1) d'avancement, l'alimentation sélective de chacune des voies (16, 17) de retour parallèles et de la ligne supérieure (1) d'avancement en montages-supports (2) étant assurée par l'intermédiaire des translateurs latéraux précités.

2. Installation de transfert de produits manufacturés, selon la revendication 1, caractérisée par le fait que la ligne médiane de supports centraux est dédoublée en deux lignes parallèles (18a, 18b) soutenant la ligne supérieure (1) d'avancement, et délimitant une troisième voie (23) centrale de retour des montages-supports (2) vides, sensiblement située sous ladite ligne supérieure (1) d'avancement.

3. Installation de transfert de produits manufacturés, selon l'une quelconque des revendications 1 et 2, caractérisée par le fait que chacune des voies (16, 17, 23) de retour parallèles est distinctement alimentée en montages-supports (2) munis de moyens (5, 6) de centrage et de verrouillage spécifiques destinés à recevoir des éléments d'un type différent de carrosseries (7).

4. Installation de transfert de produits manufacturés, selon l'ensemble des revendications 2 et 3, caractérisée par le fait que sur les trois voies (16, 17, 23) de retour parallèles, l'une est affectée aux montages-supports (2) spécifiques à un véhicule à cadence de production constante, la seconde à un véhicule à cadence de production décroissante, et la troisième à un véhicule à cadence de production croissante en compensation de la seconde.

5. Installation de transfert de produits manufacturés, selon l'une quelconque des revendications 1 à 4, caractérisée par le fait que les translateurs latéraux, de type connu, sont pilotés par des moyens de repère sélectifs associés aux différents types d'éléments de carrosseries (7) se présentant en entrée et sortie de l'installation.

**Claims**

1. An installation for transferring manufactured products, especially automotive vehicle body elements, applicable particularly to automatic robot assembling lines, said installation being constituted by an upper feeding line (1) for advancing mounting supports (2) which hold said manufactured products (7), and a lower return line (3) for returning said mounting supports (2) in the empty state, said return line constituting a storing line for storing said mounting supports (2) by accumulating the same, and extending substantially below said upper line (1), as well as lateral translational conveying devices provided at each one of its ends, characterized in that the return line (3) comprises two parallel tracks (16, 17) separated by a median line of central supports (18) which hold the upper feeding line (1) and are externally delimited each by a lateral structure (19, 20) acting as a buttress for said upper feeding line (1), the selective loading of each one of said parallel return tracks (16, 17) and of the upper feeding line (1) with mounting supports (2) being affected through the intermediary of said lateral translational conveying devices.

2. An installation for transferring manufactured products according to claim 1, characterized in that the median line of central supports is divided into two parallel lines (18a, 18b) which hold the upper feeding line (1) and delimit a third central return line (23) for returning the empty mounting supports (2), said third return line being located substantially below said upper feeding line (1).

3. An installation for transferring manufactured products according to any one of claims 1 and 2, characterized in that each one of said parallel return lines (16, 17, 23) is separately loaded with mounting supports (2) provided with specific centering and locking means (5, 6) adapted to receive different types of body elements (7).

4. An installation for transferring manufactured products according to both of claims 2 and 3, characterized in that one of said parallel return lines (16, 17, 23) is associated to mounting supports (2) which are specific for a vehicle produced at a constant production rate, the second one of said return lines being associated to a vehicle produced at a decreasing production rate, and the third one of said return lines being associated to a vehicle produced at an increasing production rate, compensating that of the second one.

5. An installation for transferring manufactured products according to any one of claims 1 to 4, characterized in that the lateral translational conveying devices, which are of a type known *per se*, are piloted by selective reference means associated to the various types of body elements (7) appearing at the inlet and the oulet of the installation.

**Ansprüche**

1. Einrichtung zur Förderung von Manufakturerzeugnissen, insbesondere von Kraftfahrzeugkarrosserieteilen, anwendbar insbesondere bei automatischen Montage-Roboterfliessbandstrassen, mit einer oberen Strasse (1) zum Vorschub vom Montagehaltern (2) für die Manufakturerzeugnisse (7) und einer unteren Strasse (3) für die Rückführung der leeren Montagehalter (2), welch letztere Strasse eine die Montagehalter (2) anhäufende Speicherstrasse bildet und sich wesentlich unter der oberen Fliessbandstrasse (1) erstreckt, sowie mit an jedem ihrer Enden angeordneten Querförderern, dadurch gekennzeichnet, dass die Rückführstrasse (3) zwei parallele Bahnen (16, 17) aufweist, die durch eine Mittellinie von Zentralstützen (18) getrennt sind, welche die obere Vorschubstrasse (1) halten, wobei diese Bahnen aussen durch je eine Seitenstruktur (19, 20) begrenzt sind, die als Widerlager für die obere Vorschubstrasse (1) dient, und wobei die wahlweise Beschickung jeder der parallelen Rückführbahnen (16, 17) und der oberen Vorschubstrasse (1) mit Montagehaltern (2) vermittels der genannten Queförderer erfolgt.

2. Einrichtung zur Förderung von Manufakturerzeugnissen nach Anspruch 1, dadurch gekennzeichnet, dass die Zentralstützenmittellinie in zwei parallele Linien (18a, 18b) aufgeteilt ist, die die obere Vorschubstrasse (1) stützen und eine dritte, mittlere Rückführlinie (23) für die leeren Montagehalter (2) begrenzen, welche wesentlich unterhalb der oberen Vorschubstrasse (1) liegt.

3. Einrichtung zur Förderung von Manufakturerzeugnissen nach einem der Ansprüche 1 und 2, dadurch gekennzeichnet, dass jede der parallelen Rückführlinien (16, 17, 23) gesondert mit Montagehaltern (2) beschickt wird, die mit zur Aufnahme verschiedenartiger Karrosserieteile (7) bestimmten, spezifischen Zentrier- und Verriegelungsmitteln (5, 6) versehen sind.

4. Einrichtung zur Förderung von Manufakturerzeugnissen nach den beiden Ansprüchen 2 und 3, dadurch gekennzeichnet, dass von den drei parallelen Rückführlinien (16, 17, 23) eine den für ein Fahrzeug mit konstantem Fertigungsrhythmus spezifischen Montagehaltern (2), die zweite Rückführlinie den für ein Fahrzeug mit abnehmendem Fertigungsrhythmus und die dritte Rückführlinie den für ein Fahrzeug mit einem den zweiten Fertigungsrhythmus ausgleichenden, zunehmenden Fertigunsrhythmus spezifischen Montagehaltern zugeordnet ist.

5. Einrichtung zur Förderung von Manufakturerzeugnissen nach einem der Ansprüche 1 bis 4, dadurch gekennzeichnet, dass die an sich bekannten Querförderer durch den verschiedenartigen am Eingang und Ausgang der Einrichtung erscheinenden Karrosserieteilen (7) zugeordnete Wahl-Merkzeichenmittel gesteuert werden.

# FIG_1

# FIG_2

# FIG_3

# FIG_4

FIG_5